# EUROPEAN PATENT APPLICATION

(11) **EP 3 187 460 A1**
(43) Date of publication of application: **05.07.2017**
(21) Application number: 16179691.7
(22) Date of filing: 15.07.2016
(51) Int. Cl.: C01B 3/32, F02B 43/10, F02M 25/10

(54) **HYDROGEN CARBON CLEANING METHOD FOR VEHICLE**

(30) Priority: 30.12.2015 TW 104144408
(71) Applicant: Chung Hsin Electric & Machinery Mfg. Corp., Taoyuan City (TW)
(72) Inventor: TSAI, Yu-Chou, Taoyuan City (TW); SUNG, Liam-Yung, Taoyuan City (TW); CHANG, Jung-Kuei, Taoyuan City (TW); CHEN, Li-Chih, Taoyuan City (TW); WANG, Jian-Kai, Taoyuan City (TW)
(74) Representative: Fuchs Patentanwälte Partnerschaft mbB

(57) **Abstract**

A hydrogen carbon cleaning method for a vehicle is provided, which includes the following steps. First, a reformer is provided. Then, high purity hydrogen is provided by the reformer. Next, a hydrogen carbon cleaning process is performed on a vehicle with the high purity hydrogen.

## Description

### CROSS REFERENCE TO RELATED APPLICATIONS

This Application claims priority of Taiwan Patent Application No. 104144408, filed on Dec. 30, 2015, the entirety of which is incorporated by reference herein.

### BACKGROUND OF THE INVENTION

### Field of the Invention

The present invention relates to a hydrogen carbon cleaning method for vehicles, and in particular to a hydrogen carbon cleaning method for vehicles utilizing reformer.

### Description of the Related Art

Electrolytic hydrogen production technology is utilized in a conventional hydrogen carbon cleaning apparatus. The conventional hydrogen carbon cleaning apparatus cannot produce enough hydrogen, and particularly not enough to clean a high-displacement vehicle. Additionally, the conventional hydrogen carbon cleaning apparatus has a high level of power consumption.

A conventional reformer can produce hydrogen. However, the purity of the hydrogen produced by the conventional reformer is low. Additionally, the gas produced by the conventional reformer is carbon-containing gas. The carbon-containing gas increases carbon deposition rather than cleaning the carbon. Therefore, in the conventional concept, the reformer cannot be utilized in the vehicle carbon cleaning process.

### BRIEF SUMMARY OF THE INVENTION

In one embodiment, a hydrogen carbon cleaning method for vehicles is provided, which includes the following steps. First, a reformer is provided. Then, high purity hydrogen is provided by the reformer. Next, a hydrogen carbon cleaning process is performed on a vehicle with the high purity hydrogen.

In one embodiment, the hydrogen carbon cleaning method further includes the following steps. First, the high purity hydrogen is communicated to an inlet of an engine of the vehicle. Next, the engine of the vehicle is started. Then, a hydrogen supply quantity is selected according to an engine displacement to perform the hydrogen carbon cleaning process.

In one embodiment, the hydrogen carbon cleaning method further includes the step of stopping the hydrogen carbon cleaning process after a scheduled time.

In one embodiment, the hydrogen carbon cleaning method further includes the step of utilizing a tail-exhaust motoring system to monitor an exhaust exhausted from the vehicle during the hydrogen carbon cleaning process, wherein the hydrogen carbon cleaning process is stopped when the tail-exhaust motoring system determines that the desired carbon cleaning effect has been achieved.

Compared to conventional electrolytic hydrogen production technology, the reformer of the embodiments of the invention provides high hydrogen purity, and the hydrogen production thereof is up to 80 SLPM (the hydrogen production of the conventional electrolytic hydrogen production apparatus is about 20 SLPM). Therefore, the embodiments of the invention can be utilized on gasoline cars or diesel cars with high displacement. Additionally, the reformer of the embodiments of the invention has advantages such as saving power, having a high production speed, and having high productivity. The operation power of the reformer of the embodiments of the invention is only 100W, and the hydrogen for the hydrogen carbon cleaning process can be prepared within 3 minutes.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:
Fig. 1A shows a hydrogen carbon cleaning method for a vehicle of a first embodiment of the invention;
Fig. 1B shows further steps of the hydrogen carbon cleaning method for a vehicle of the first embodiment of the invention;
Fig. 2 shows a hydrogen carbon cleaning method for a vehicle of a second embodiment of the invention; and
Fig. 3 shows a reformer of an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

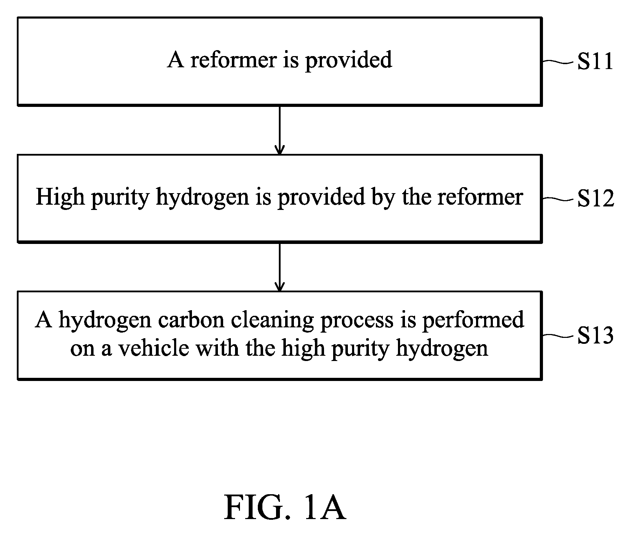

Fig. 1A shows a hydrogen carbon cleaning method for a vehicle of a first embodiment of the invention, which includes the following steps. First, a reformer is provided (S11). Then, high purity hydrogen is provided by the reformer (S12). Next, a hydrogen carbon cleaning process is performed on a vehicle with the high purity hydrogen (S13).

In one embodiment, the reformer is a methanol type reformer, which includes a palladium membrane purifying module. The methanol type reformer with the palladium membrane purifying module can purify the hydrogen-rich gas to the hydrogen with a purity greater than 99.95% (concentration of carbon monoxide smaller than Ippm). Therefore, the embodiment of the invention performs the hydrogen carbon cleaning process with the methanol type reformer. However, the disclosure is not meant to restrict the invention. The reformer can also be a natural gas reformer, a liquefied petroleum gas reformer, or a diesel reformer.

Compared to the conventional electrolytic hydrogen production technology, the reformer of the embodiments of the invention provides high hydrogen purity, and the hydrogen production thereof is up to 80 SLPM (the hydrogen production of the conventional electrolytic hydrogen production apparatus is about 20 SLPM). Therefore, the embodiments of the invention can be utilized to gasoline cars or diesel cars with high displacement. Additionally, the reformer of the embodiments of the invention has advantages such as power saving, high production speed, and high productivity. The operation power of the reformer of the embodiments of the invention is only 100W, and the hydrogen for the hydrogen carbon cleaning process can be prepared within 3 minutes.

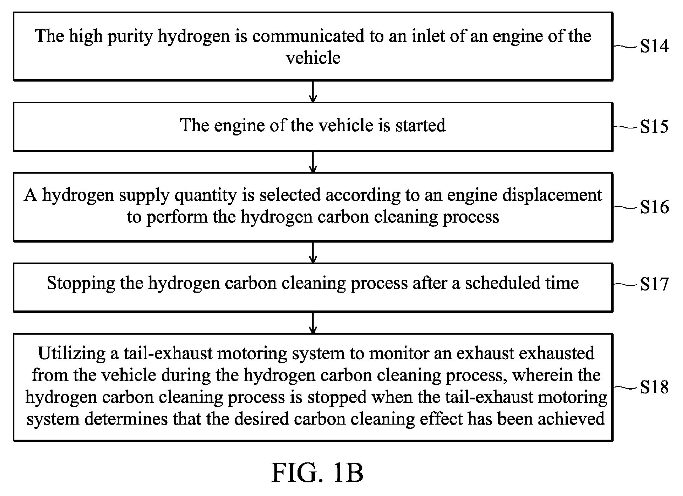

The conventional electrolytic hydrogen production technology directly provides the highest hydrogen productivity. The reformer of the embodiments of the invention has increased hydrogen productivity. Therefore, the reformer of the embodiments of the invention can select the hydrogen supply quantity according to the engine displacement of the vehicle to perform the hydrogen carbon cleaning process to improve efficiency and reduce fuel consumption. With reference to Fig. 1B, in one embodiment, the hydrogen carbon cleaning method further includes the following steps. First, the high purity hydrogen is communicated to an inlet of an engine of the vehicle (S14). Next, the engine of the vehicle is started (S15). Then, a hydrogen supply quantity is selected according to an engine displacement to perform the hydrogen carbon cleaning process (S16).

With reference to Fig. 1B, in one embodiment, the hydrogen carbon cleaning method further includes the step of stopping the hydrogen carbon cleaning process after a scheduled time (S17).

With reference to Fig. 1B, in one embodiment, the hydrogen carbon cleaning method further includes the step of utilizing a tail-exhaust motoring system to monitor an exhaust exhausted from the vehicle during the hydrogen carbon cleaning process, wherein the hydrogen carbon cleaning process is stopped when the tail-exhaust motoring system determines that the desired carbon cleaning effect has been achieved (S18).

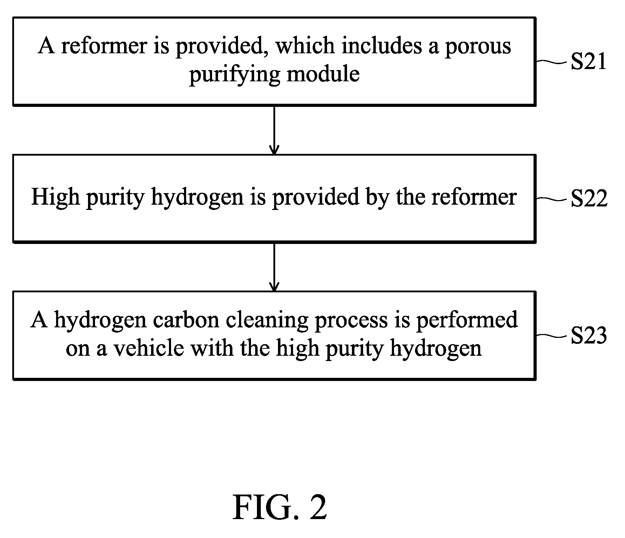

Fig. 2 shows a hydrogen carbon cleaning method for a vehicle of a second embodiment of the invention, which includes the following steps. First, a reformer is provided, which includes a porous purifying module (S21). Then, high purity hydrogen is provided by the reformer (S22). Next, a hydrogen carbon cleaning process is performed on a vehicle with the high purity hydrogen (S23). Similar to the first embodiment, the reformer with the porous purifying module can purify the hydrogen-rich gas to the hydrogen with a purity greater than 99.95% (concentration of carbon monoxide smaller than 1ppm). Therefore, the embodiment of the invention performs the hydrogen carbon cleaning process with the methanol type reformer. In one embodiment, a hydrogen supply quantity is selected according to an engine displacement to perform the hydrogen carbon cleaning process. In another embodiment, the hydrogen carbon cleaning method further includes the step of utilizing a tail-exhaust motoring system to monitor an exhaust exhausted from the vehicle during the hydrogen carbon cleaning process, wherein the hydrogen carbon cleaning process is stopped when the tail-exhaust motoring system determines that the desired carbon cleaning effect has been achieved.

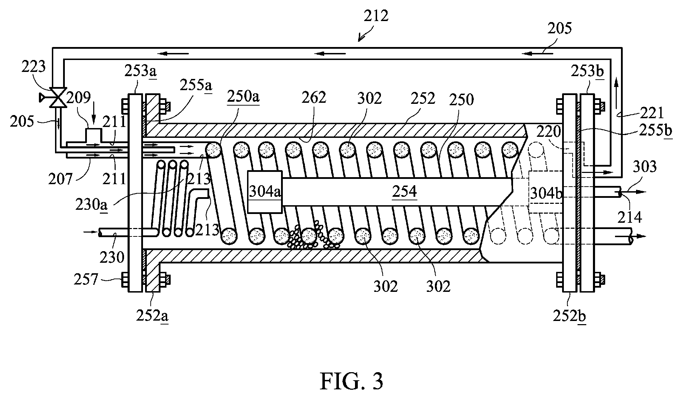

Fig. 3 shows a methanol type reformer 212 of an embodiment of the invention. The methanol type reformer 212 includes an outer metal tube 252 sealed at each end by end plates 253, individually 253a and 253b and gaskets 255, individually 255a and 255b. Bolts 257 secure end plates 253 against the shoulders 252, individually, 252a and 252b, at each end of tube 252. A hydrogen purification module lies within and generally concentric to tube 252 and includes a thin palladium alloy membrane tube 254 sealed by end caps 304a and 304b. Alternatively, the membrane tube 254 may be comprised of hydrogen-selective and hydrogen-permeable materials other than palladium alloys, including porous carbon, porous ceramics, hydrogen-permeable metals other than palladium porous metals, and metal-coated porous carbon and porous ceramics and porous metals. As may be appreciated, the membrane tube 254 and caps 304 may be supported in some fashion (not shown) within tube 252. End cap 304b communicates with outlet port 214 through plate 253b and the product hydrogen stream 303 emerges from outlet port 214. A polishing catalyst bed, preferably a methanation catalyst, is located at the permeate side of the membrane tube 254 (not shown).

The inlet 230 passes through wall 253a and couples to a vaporization coil 230a. Outlet 231 of coil 230 a feeds directly into a reformation region 262 defined as being within tube 252 but external of the membrane tube 254. Also located within and distributed throughout the reformation region 262 is a combustion coil 250. In the particular embodiment illustrated, the coil 250 spirally surrounds the membrane tube 254 and extends substantially throughout the entire reformation region 262. A combustion catalyst 302 lies within and either along the length of the coil 250 or localized within the coil 250 at or near end 250a. End 250a of the coil 250 receives a fuel stock, as described more fully hereafter, and combustion occurs within the coil 250 as the fuel stock travels along the coil 250 and encounters the combustion catalyst 302 therein. Because the coil 250 extends uniformly throughout the reformation region 262 and because the coil 250 provides significant surface area, rapid and well distributed heat transfer occurs from the combustion process occurring within the coil 250 to the surrounding reformation region 262.

The reformation region 262 couples through wall 253b at its outlet 220 to a conduit 221. The conduit 221 carries the byproduct stream 205, i.e., the byproduct of hydrogen reformation including a selected amount of hydrogen intentionally not taken across the membrane tube 254, to the combustion process. The conduit 221 delivers byproduct stream 205 to a pressure let down valve 223. Byproduct stream 205 then continues, at lowered pressure, into an intake manifold 207. The intake manifold 207 includes an air inlet 209, e.g., coupled to an air blower or to discharged air from the cathode component of the fuel cell and air passage way 211 carrying combustion air to a mixing region 213 at or near the inlet 250a of combustion the coil 250. The combustion fuel stock as provided by the byproduct stream 205, thereby mixes with the incoming combustion air in the mixing region 213 and enters end 250a of combustion the coil 250. The combustion catalyst 302 within the coil 250 ignites the fuel stream 205 and heat transfers efficiently and rapidly in well distributed fashion into and throughout the reformation region 262.

Table 1 shows the effect of the hydrogen carbon cleaning method of the embodiment compared to the conventional technology.

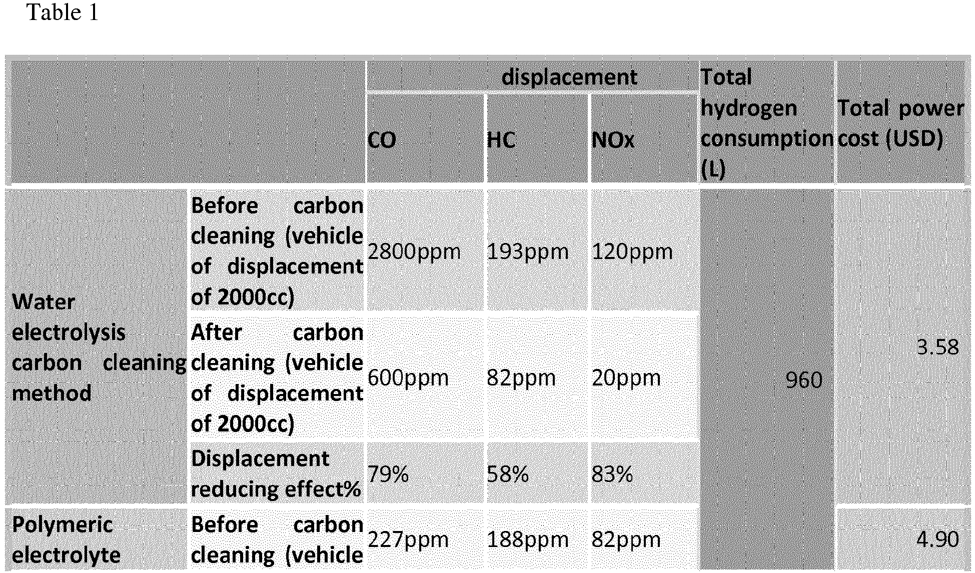

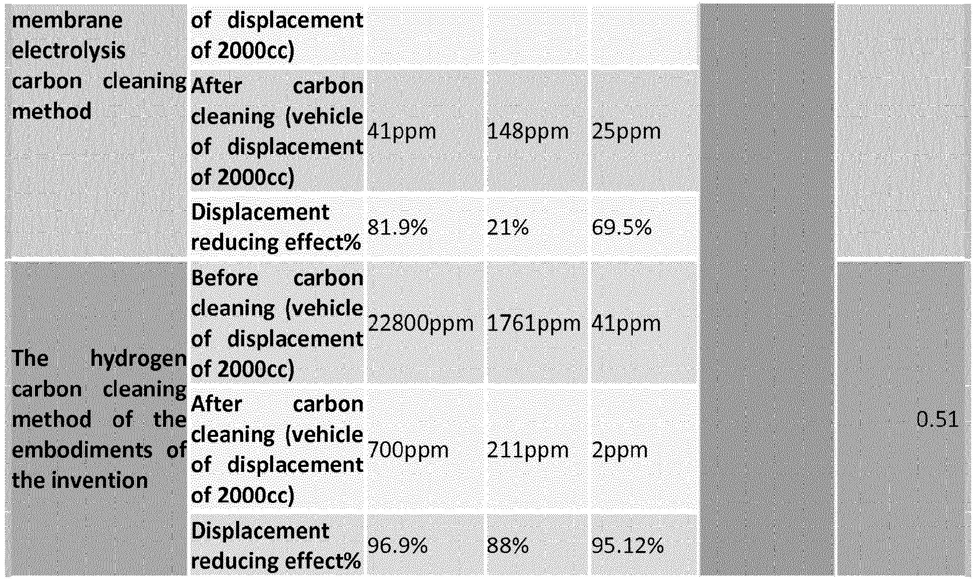

As shown above, the hydrogen carbon cleaning method of the embodiments of the invention has improved carbon cleaning effect and reduced power consumption.

In one embodiment, a hydrogen carbon cleaning apparatus is provided, including an engine flameout sensor and a fuel level sensor. In one embodiment, the engine flameout sensor includes a differential pressure switch, wherein an end of the differential pressure switch is fastened to a car exhaust pipe to detect pressure, and the other end thereof detects atmospheric pressure. When the car engine flames out, the differential pressure switch sends a signal to the hydrogen carbon cleaning apparatus, and the hydrogen carbon cleaning apparatus enters an emergency stop process, wherein the power of the reformer is turned off, and all the valves of the hydrogen production ends are closed, and the hydrogen is prevented from entering the engine. Additionally, the hydrogen carbon cleaning apparatus comprises a fuel level sensor. When the fuel (aqueous methanol) is lower than a warning level, an alert box appears after the hydrogen carbon cleaning process, and the next hydrogen carbon cleaning process can be performed only when the fuel is refilled. In the conventional art, the engine flameout sensor detects a flameout by measuring car battery voltage, wherein misjudgment occurs due to different life time and performance of the power generator and the battery. However, in the embodiments of the invention, the differential pressure switch feeds the state of the engine of the hydrogen carbon cleaning apparatus immediately, and the security of the carbon cleaning process the increased.

In one embodiment, as to the voltage instability or power suspension problems. An UPS system is utilized to shut down the hydrogen carbon cleaning apparatus in a normal, safe way when the electricity supply is suddenly stopped.

In one embodiment, the palladium membrane purifying module comprises a palladium membrane stack.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term).

While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A hydrogen carbon cleaning method for a vehicle, comprising:
providing a reformer;
providing a high purity hydrogen by the reformer; and
performing a hydrogen carbon cleaning process toward a vehicle with the high purity hydrogen.

2. The hydrogen carbon cleaning method as claimed in claim 1, further comprising:
communicating the high purity hydrogen to an inlet of an engine of the vehicle;
starting the engine of the vehicle; and
selecting a hydrogen supply quantity according to an engine displacement to perform the hydrogen carbon cleaning process.

3. The hydrogen carbon cleaning method as claimed in claim 1, further comprising:
stopping the hydrogen carbon cleaning process after a scheduled time.

4. The hydrogen carbon cleaning method as claimed in claim 3, further comprising:
utilizing a tail-exhaust motoring system to monitor an exhaust exhausted from the vehicle during the hydrogen carbon cleaning process, wherein the hydrogen carbon cleaning process is stopped when the tail-exhaust motoring system determines that a desired carbon cleaning effect has been achieved.

5. The hydrogen carbon cleaning method as claimed in claim 1, wherein the reformer is a methanol type reformer.

6. The hydrogen carbon cleaning method as claimed in claim 5, wherein the reformer comprises:
a palladium membrane purifying module, comprising a palladium alloy membrane tube;
a coil, spirally surrounding the palladium alloy membrane tube;
a combustion catalyst, injected to the coil;
a metal tube, wherein the palladium alloy membrane tube, the coil and the combustion catalyst are disposed in the metal tube, a hydrogen flow is generated from the palladium alloy membrane tube, and the hydrogen flow exhausts from an end of the palladium alloy membrane tube.

7. The hydrogen carbon cleaning method as claimed in claim 5, wherein the reformer comprises:
a palladium membrane purifying module, comprising a palladium membrane stack.

8. The hydrogen carbon cleaning method as claimed in claim 5, wherein the reformer comprises:
a porous purifying module, comprising a porous hydrogen selective membrane tube;
a coil, spirally surrounding the porous hydrogen selective membrane tube;
a combustion catalyst, injected to the coil;
a metal tube, wherein the porous hydrogen selective membrane tube, the coil and the combustion catalyst are disposed in the metal tube, a hydrogen flow is generated from the porous hydrogen selective membrane tube, and the hydrogen flow exhausts from an end of the porous hydrogen selective membrane tube.

9. The hydrogen carbon cleaning method as claimed in claim 1, further comprising:
motoring the hydrogen carbon cleaning process with an engine flameout sensor and a fuel level sensor.
